# EUROPEAN PATENT SPECIFICATION

(11) **EP 3 450 877 B1**
(45) Date of publication and mention of the grant of the patent: **17.06.2020**
(21) Application number: 18186984.3
(22) Date of filing: 02.08.2018
(51) Int. Cl.: F24T 10/10

(54) **UNDERGROUND DEVICE FOR OBTAINING HEAT FROM THE GROUND AND METHOD FOR THE UNDERGROUND PLACEMENT OF A PIPE SYSTEM FOR OBTAINING HEAT FROM THE GROUND**
UNTERIRDISCHE VORRICHTUNG ZUR GEWINNUNG VON WÄRME AUS DEM BODEN UND VERFAHREN ZUR UNTERIRDISCHEN PLATZIERUNG EINES ROHRSYSTEMS ZUR GEWINNUNG VON WÄRME AUS DEM BODEN
DISPOSITIF SOUTERRAIN POUR OBTENIR DE LA CHALEUR DEPUIS LE SOL ET PROCÉDÉ DE MISE EN PLACE SOUTERRAINE D'UN SYSTÈME DE CONDUITE POUR OBTENIR DE LA CHALEUR DEPUIS LE SOL

(30) Priority: 28.08.2017 BE 201705590
(43) Date of publication of application: 06.03.2019
(73) Proprietor: Renotec NV, 2440 Geel (BE)
(72) Inventor: Fraussen, Roeland, 2440 Geel (BE)
(74) Representative: Kamphuis, Albertus Johannes

(56) References cited:
- EP-A1- 2 975 312
- EP-A2- 2 230 470
- WO-A1-2016/023867
- DE-A1- 3 607 207
- DE-A1-102006 008 379
- DE-C2- 3 348 006
- DE-U1-202004 018 084
- DE-U1-202011 106 471
- JP-A- 2000 240 029
- JP-A- 2002 030 717
- JP-A- 2002 348 942

## Description

The present invention relates to an underground device for obtaining heat from the ground, that is to say the earth layer, and a method for the underground placement of a pipe system for obtaining heat from the ground.

It is well known to stream fluid through underground pipe systems to heat the fluid by means of terrestrial heat and then to use this heat by means of a heat pump for heating a building. In this regard, said pipe systems can be placed at a relatively slight depth of approximately one to two metres.

The construction of such a pipe system is often not simple however, since the ground over a significant area needs to be dug away before the pipe system can be placed. This is difficult to realise, however, especially in heavily built-up environments, for example cities, since this has very major consequences for other users of the urban environment, and since other underground pipelines and infrastructure are often already present that of course are not allowed to be damaged.

Document WO2016/023867 discloses a method for renovating a sewer and document EP2230470 a heat exchange system including one or more ground loop circuits and a conduit.

The present invention seeks to offer a solution for the aforementioned and other disadvantages and provides thereto an underground device for obtaining heat from the ground, the device comprising a sewer having a first wall and a second wall, said second wall disposed on the inner side of the first wall, the sewer having an internal height, a pipe system for conducting a fluid to be heated being disposed in said second wall, the pipe system extending over at least 75% of said height, whereby the second wall is made of concrete.

For the sake of clarity, it is observed that the characteristic of said pipe system extending over a certain percentage of the height is equivalent to the characteristic of the vertical difference in distance between the top part and the bottom part of said pipe system being said percentage of the height.

This has as an advantage that heat can be obtained from the ground surrounding the sewer on all sides. Obviously some heat will also be obtained from the relatively warm sewage water, but the heat will be substantially obtained from the ground in this invention. This is thus the reason that said pipe system extends over a large part of the height of the sewer.

Most sewers are after all dimensioned so largely that they can process a maximum amount water that is tens of times higher than the average amount of water they can process, so that thanks to the invention a much larger amount of heat can be obtained than when this were to be obtained from the sewage water only.

A further advantage is that said second wall can have a double function in this regard. Sewers are after all sometimes renovated by applying an inner layer to the inner side of an old sewer to reinforce it and make it water tight. Said second wall as mentioned in the invention, with the disposed pipe system, can simultaneously serve as inner layer for renovation of a sewer and as a means for obtaining terrestrial heat.

To this end, said second wall is preferably a complete wall, that is to say a wall that is disposed along the whole inner circumference of the first wall. This can be alternatively expressed as: said second wall is a wall that, at the place where said pipe system is disposed, is disposed on the whole inner surface of the first wall.

To this end, said second wall is preferably also water tight.

In a preferred embodiment, said second wall has an inner surface and an outer surface, the outer surface preferably abutting the first wall, said pipe system being disposed in said second wall in a position lying closer to the outer surface than to the inner surface.

Hereby said pipe system lies relatively far outward, so that a maximum amount of heat from the surrounding ground can be obtained. This is maximal in an embodiment in which said pipe system is disposed against the first wall.

Preferably said pipe system is substantially formed by pipes extending in the direction in which the sewer extends. This is normally speaking horizontal or less than 5° deviating from horizontal.

The pipes of said pipe system are preferably embedded for at least 75% in the concrete of said second wall.

In a preferred embodiment, said pipe system forms part of a closed circuit for a fluid.

The internal free height of the sewer is preferably at least 1 metre. The internal free height of the sewer is preferably a maximum of 4 metres.

The invention also relates to a heating device for heating a building, said heating device comprising an underground device according to the invention, said heating device comprising a heat pump, said underground device and said heat pump being coupled such that said heat pump can transfer heat from said underground device to said building, said pipe system and said heat pump preferably forming part of a closed circuit for a fluid.

The invention further relates to a method for heating a building, in which a fluid is heated in an underground device as defined above and in which said fluid, after heating, is conducted to the cold side of a heat pump, in which heat from the warm side of said heat pump is supplied to said building, said heat pump and said pipe system preferably forming part of a closed circuit for the fluid.

The invention further relates to a method for extracting heat from the earth layer and heating a building therewith, in which a fluid is heated in an underground device according to the invention and is which said fluid, after heating, is conducted to the cold side of a heat pump, in which heat from the warm side of said heat pump is supplied to said building, said heat pump and said pipe system preferably forming part of a closed circuit for the fluid.

By way of illustration, it is observed that by the cold side and warm side of a heat pump are meant the parts of said heat pump to which external heat is supplied and by which heat is supplied for external use respectively.

The mutual centre-to-centre distance between the various pipes of said pipe system is preferably at least 4 cm, and with greater preference at least 6 cm and with still greater preference at least 8 cm. Said mutual centre-to-centre distance is preferably a maximum of 50 cm and with greater preference a maximum of 40 cm.

The invention further relates to a method for the underground placement of a pipe system for obtaining heat from the ground, in which a second wall is installed on the inner side of a first wall of a sewer, in which a pipe system is installed in said second wall, the sewer having a height, in which the pipe system is installed over at least 75% of said height, whereby the second wall is made of concrete.

The first wall is normally speaking an existing historical wall, either requiring renovation or not.

This is a method for installing a pipe system that, certain in urban environments, is easier than the already known methods. Moreover, renovation and installation of a pipe system can be combined.

In a preferred variant, the method is a method for renovating an existing sewer and the underground placement of a said pipe system.

In a preferred variant, said pipe system is installed in an existing sewer from the inner side.

Said second wall is preferably installed against the first wall, so that said pipe system is placed as far outward as possible and can take up as much heat as possible from the ground.

Said pipe system preferably comprises one or more flexible pipes, or consists substantially of flexible pipes. This has as an advantage that ground movements lead to damage to said pipe system less soon than otherwise would be the case. Such ground movements can, for example, be caused by ground being washed away, earthquakes or heavy traffic.

In a further preferred variant, said pipe system is first installed against the first wall, after which said second wall is installed, said second wall preferably being made of concrete that is sprayed against the first wall and around said pipe system.

In a preferred variant, said pipe system comprises a number of parallel straight pipes, and said pipes are installed such that they extend in the same direction in which the sewer extends, that is to say mostly approximately horizontal.

Such a pipe system is easy and quick to install.

To clarify the invention, a preferred embodiment is described below, with reference to the following figures, where
figure 1 partly in perspective and partly schematically shows a heating device according to the invention;
figure 2 shows a cross section of part of the device of figure 1 according to line II-II; and
figure 3 is a representation of the part of figure 2 designated by F3.

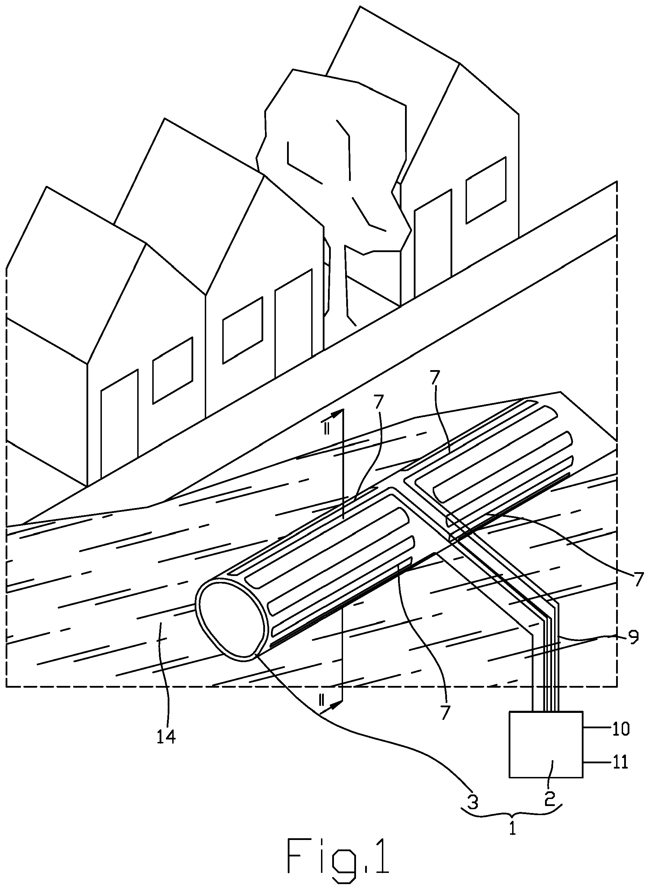

Said heating device 1 shown in figure 1 consists substantially of a heat pump 2 and an underground sewer 3 having an internal height H of approximately 1.5 metres in this example.

Said sewer 3 has a first wall 4, lying on the outer side, and a second wall 5, lying on the inner side. In this regard, the outer surface 6 of said second wall 5 lies directly against said first wall 4. In said second wall 5, pipe systems 7, in this example each made of ten flexible plastic pipes 8, are installed.

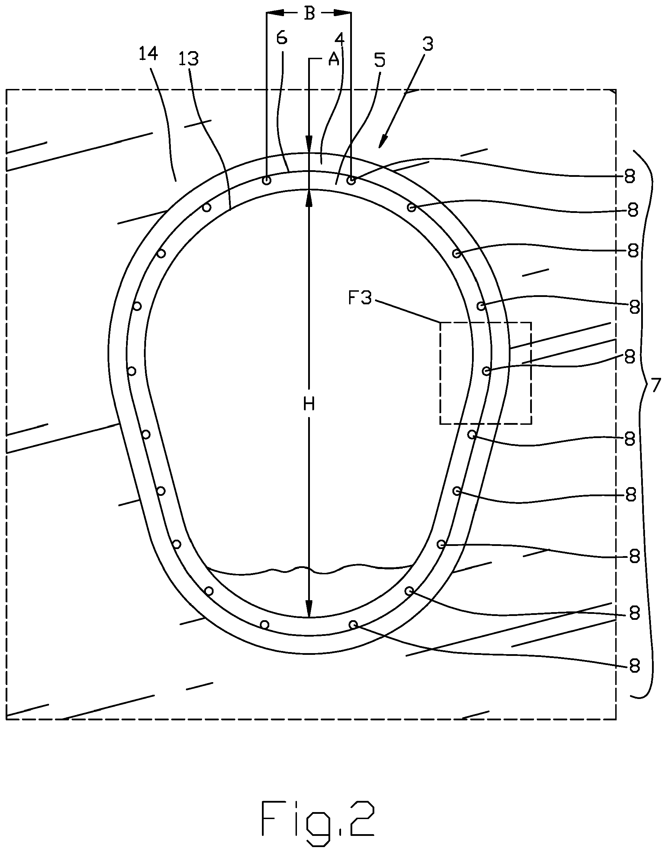

In this regard, such pipe systems 7 are installed both on the left-hand side and the right-hand side of said sewer 3, as shown in figure 2, which shows a cross section through two such pipe systems 7.

For the sake of clarity, it is observed that in figure 1 only two such pipe systems 7 are shown, both on the right-hand side of said sewer 3. Said pipe systems 7 on the left-hand side are not shown in figure 1.

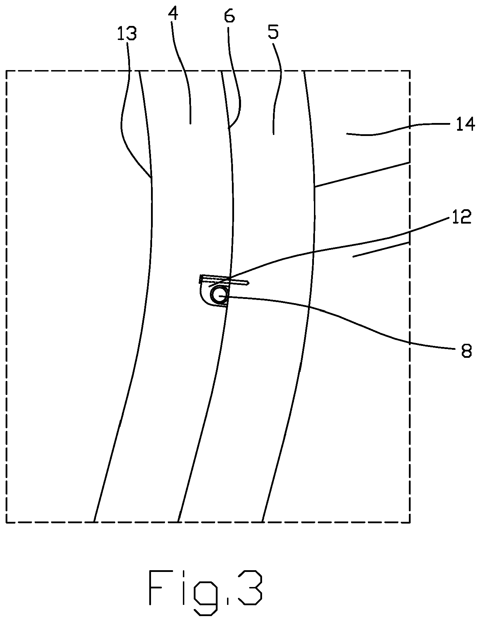

As shall become clear from figures 2 and 3, said pipe systems 7 are installed against said first wall 4 and embedded in said second wall 5.

As shall become clear from figure 2, the vertical distance A between the top pipe 8 and the bottom pipe 8 is slightly larger than the height H of said sewer 3. The mutual centre-to-centre distance B between the pipes 8 is between 20 and 25 cm. Said pipe systems thus extend over slightly more than the full height H of said sewer 3.

Said second wall 5 is installed over the full inner circumference of said first wall 4 and thus runs completely around.

Said first wall 4 can be made of any material of which sewers are normally speaking made, but in practice said first wall 4 will mostly be a mortar stone wall or a concrete wall. In this example, said second wall 5 is made of concrete.

Said pipe systems 7 are connected with said heat pump 2 via pipelines 9, so that a closed circuit for water is formed. Said heat pump has a discharge line 10 and a return line 11 for discharging heat to a desired location.

Such pipe systems 7 can be easily be placed as follows.

In an old sewer that is to be renovated, flexible plastic pipes 8 are bent on the spot in the desired pattern for the formation of pipe systems 7. Said pipes are fixed by means of nail clamps 12.

Subsequently a layer of air-placed concrete is sprayed over said pipes, for the formation of said second wall 5. Since said sewer 3 is large enough to be accessible, this can be done manually by a person. If necessary, a reinforcement can be disposed in said second wall 5.

The inner surface 13 of said second wall 5 is finished smoothly. Said sewer 3 is now renovated and can be used again for many years to come, and is also provided with pipe systems 7 for obtaining terrestrial heat.

The original wall of the old sewer thus forms in this regard the first, outer, wall 4 of the renovated sewer 3.

Upon use of said heating device 1, a heat-transporting fluid, in this example water, is pumped around by said pipe systems 7 via the cold side of said heat pump 2. The water, in this regard, absorbs heat, originating in particular from the ground 14 surrounding said sewer. The temperature of the water at the outlet of said pipe system is, dependent on the circumstances, typically 10°C to 15°C.

Said heat is used by said heat pump 2 in a known manner to supply useful heat for heating a building.

## Claims

1. Method for the underground placement of a pipe system (7) for obtaining heat from the ground (14), in which a second wall (5) is installed on the inner side of a first wall (4) of a sewer (3), in which a pipe system (7) is installed in said second wall (5), the sewer having a height (H), **characterised in that** the pipe system (7) is installed over at least 75% of said height (H), said second wall (5) being made of concrete.

2. Method according to claim 1, in which said second wall (5) is installed over the whole inner circumference of said first wall (4).

3. Method according to claim 1 or 2, in which said pipe system comprises a number of parallel straight pipes, and said pipes are installed such that they extend in the same direction in which the sewer extends.

4. Method according to any of claims 1 to 3, said pipe system (7) comprising one or more flexible pipes (8).

5. Method according to any of claims 1 to 4, said second wall (5) having an inner surface (13) and an outer surface (6), in which said pipe system (7) is installed in said second wall (5) in a position lying closer to the outer surface (6) than to the inner surface (5).

6. Method according to any of claims 1 to 5, in which said pipe system (7) is installed against said first wall (4), after which said second wall (5) is installed.

7. Method according to any of claims 1 to 6, wherein the method is a method for renovating an existing sewer and for the underground placement of a said pipe system.

8. Method according to any of claims 1 to 7, in which said pipe system (7) is installed and in which shotcrete is subsequently sprayed over said pipe system (7) for the formation of said second wall (5).

9. Underground device for obtaining heat from the ground, said underground device comprising a sewer (3) having a first wall (4) and a second wall (5), said second wall (5) residing on the inner side of said first wall (4), the sewer (3) having a height (H), a pipe system (7) being disposed in said second wall (5), **characterised in that** said pipe system (7) extends over at least 75% of said height (H), said second wall (5) being made of concrete.

10. Underground device according to claim 9, **characterised in that** said second wall (5) has an inner surface (13) and an outer surface (6), said pipe system (7) being disposed in said second wall (5) in a position lying closer to said outer surface (6) than to said inner surface (13).

11. Underground device according to claim 9 or 10, said pipe system (7) being disposed against said first wall (4).

12. Underground device according to any of claims 9 to 11, whereby said pipe system is substantially formed by pipes extending in the direction in which the sewer extends.

13. Underground device according to any of claims 9 to 12, whereby said pipe system forms part of a closed circuit for a fluid.

14. Heating device (1) for heating a building, said heating device comprising an underground device according to any of claims 9 to 13, said heating device comprising a heat pump (2), said underground device and said heat pump (2) being coupled so that said heat pump can transfer heat from said underground device to said building.

15. Method for for extracting heat from the earth layer and heating a building therewith, in which a fluid is heated in an underground device according to any of claims 9 to 13 and in which said fluid, after heating, is conducted to the cold side of a heat pump (2), in which heat from the warm side of said heat pump (2) is supplied to said building.

## Patentansprüche

1. Verfahren zur unterirdischen Einbringung eines Rohrsystems (7) zum Gewinnen von Wärme aus dem Boden (14), bei dem eine zweite Wand (5) auf der Innenseite einer ersten Wand (4) eines Abwasserkanals (3) installiert wird, bei dem ein Rohrsystem (7) in der zweiten Wand (5) installiert wird, wobei der Abwasserkanal eine Höhe (H) aufweist, **dadurch gekennzeichnet, dass** das Rohrsystem (7) über mindestens 75 % der Höhe (H) installiert wird, wobei die zweite Wand (5) aus Beton besteht.

2. Verfahren nach Anspruch 1, bei dem die zweite Wand (5) über den gesamten Innenumfang der ersten Wand (4) installiert wird.

3. Verfahren nach Anspruch 1 oder 2, bei dem das Rohrsystem eine Anzahl paralleler gerader Rohre umfasst und die Rohre so installiert werden, dass sie sich in der gleichen Richtung erstrecken, in der sich der Abwasserkanal erstreckt.

4. Verfahren nach einem der Ansprüche 1 bis 3, wobei das Rohrsystem (7) eines oder mehrere flexible Rohre (8) umfasst.

5. Verfahren nach einem der Ansprüche 1 bis 4, wobei die zweite Wand (5) eine Innenfläche (13) und eine Außenfläche (6) aufweist, bei der das Rohrsystem (7) in der zweiten Wand (5) in einer Position installiert wird, die näher an der Außenfläche (6) als an der Innenfläche (5) liegt.

6. Verfahren nach einem der Ansprüche 1 bis 5, bei dem das Rohrsystem (7) an die erste Wand (4) installiert wird, wonach die zweite Wand (5) installiert wird.

7. Verfahren nach einem der Ansprüche 1 bis 6, wobei das Verfahren ein Verfahren zum Sanieren eines bestehenden Abwasserkanals und zur unterirdischen Einbringung eines Rohrsystems ist.

8. Verfahren nach einem der Ansprüche 1 bis 7, bei dem das Rohrsystem (7) installiert wird und bei dem anschließend Spritzbeton über das Rohrsystem (7) zur Bildung der zweiten Wand (5) gespritzt wird.

9. Unterirdische Vorrichtung zum Gewinnen von Wärme aus dem Boden, wobei die unterirdische Vorrichtung einen Abwasserkanal (3) mit einer ersten Wand (4) und einer zweiten Wand (5) umfasst, wobei die zweite Wand (5) auf der Innenseite der ersten Wand (4) liegt, wobei der Abwasserkanal (3) eine Höhe (H) aufweist, wobei ein Rohrsystem (7) in der zweiten Wand (5) angeordnet ist, **dadurch gekennzeichnet, dass** sich das Rohrsystem über mindestens 75 % der Höhe (H) erstreckt, wobei die zweite Wand (5) aus Beton besteht.

10. Unterirdische Vorrichtung nach Anspruch 9, **dadurch gekennzeichnet, dass** die zweite Wand (5) eine Innenfläche (13) und eine Außenfläche (6) aufweist, wobei das Rohrsystem (7) in der zweiten Wand (5) in einer Position angeordnet ist, die näher an der Außenfläche (6) als an der Innenfläche (13) liegt.

11. Unterirdische Vorrichtung nach Anspruch 9 oder 10, wobei das Rohrsystem (7) an der ersten Wand (4) angeordnet ist.

12. Unterirdische Vorrichtung nach einem der Ansprüche 9 bis 11, wobei das Rohrsystem im Wesentlichen aus Rohren besteht, die sich in der Richtung erstrecken, in der sich der Abwasserkanal erstreckt.

13. Unterirdische Vorrichtung nach einem der Ansprüche 9 bis 12, wobei das Rohrsystem Teil eines geschlossenen Kreislaufs für ein Fluid ist.

14. Heizvorrichtung (1) zum Erwärmen eines Gebäudes, wobei die Heizvorrichtung eine unterirdische Vorrichtung nach einem der Ansprüche 9 bis 13 umfasst, wobei die Heizvorrichtung eine Wärmepumpe (2) umfasst, wobei die unterirdische Vorrichtung und die Wärmepumpe (2) so gekoppelt sind, dass die Wärmepumpe Wärme von der unterirdischen Vorrichtung zu dem Gebäude übertragen kann.

15. Verfahren zum Extrahieren von Wärme aus der Erdschicht und zum Erwärmen eines Gebäudes damit, bei dem ein Fluid in einer unterirdischen Vorrichtung nach einem der Ansprüche 9 bis 13 erwärmt wird und bei dem das Fluid nach dem Erwärmen zur kalten Seite einer Wärmepumpe (2) geleitet wird, in der Wärme von der warmen Seite der Wärmepumpe (2) dem Gebäude zugeführt wird.

## Revendications

1. Procédé pour la mise en place souterraine d'un système de tuyaux (7) destiné à obtenir de la chaleur depuis le sol (14), dans lequel une deuxième paroi (5) est installée sur le côté interne d'une première paroi (4) d'un égout (3), dans lequel un système de tuyaux (7) est installé dans ladite deuxième paroi (5), l'égout ayant une hauteur (H), **caractérisé en ce que** le système de tuyaux (7) est installé sur au moins 75 % de ladite hauteur (H), ladite deuxième paroi (5) étant faite de béton.

2. Procédé selon la revendication 1, dans lequel ladite deuxième paroi (5) est installée sur toute la circonférence interne de ladite première paroi (4).

3. Procédé selon la revendication 1 ou 2, dans lequel ledit système de tuyaux comprend un certain nombre de tuyaux droits parallèles, et lesdits tuyaux sont installés de telle sorte qu'ils s'étendent dans la même direction que celle dans laquelle s'étend l'égout.

4. Procédé selon l'une quelconque des revendications 1 à 3, ledit système de tuyaux (7) comprenant un ou plusieurs tuyaux souples (8).

5. Procédé selon l'une quelconque des revendications 1 à 4, ladite deuxième paroi (5) ayant une surface interne (13) et une surface externe (6), dans lequel ledit système de tuyaux (7) est installé dans ladite deuxième paroi (5) dans une position plus proche de la surface externe (6) que de la surface interne (5).

6. Procédé selon l'une quelconque des revendications 1 à 5, dans lequel ledit système de tuyaux (7) est installé contre ladite première paroi (4), après laquelle ladite deuxième paroi (5) est installée.

7. Procédé selon l'une quelconque des revendications 1 à 6, où le procédé est un procédé destiné à rénover un égout existant et pour la mise en place souterraine d'un tel système de tuyaux.

8. Procédé selon l'une quelconque des revendications 1 à 7, dans lequel ledit système de tuyaux (7) est installé et dans lequel du béton projeté est ensuite pulvérisé sur ledit système de tuyaux (7) pour la formation de ladite deuxième paroi (5).

9. Dispositif souterrain destiné à obtenir de la chaleur depuis le sol, ledit dispositif souterrain comprenant un égout (3) ayant une première paroi (4) et une deuxième paroi (5), ladite deuxième paroi (5) se trouvant sur le côté interne de ladite première paroi (4), l'égout (3) ayant une hauteur (H), un système de tuyaux (7) étant disposé dans ladite deuxième paroi (5), **caractérisé en ce que** ledit système de tuyaux s'étend sur au moins 75 % de ladite hauteur (H), ladite deuxième paroi (5) étant faite de béton.

10. Dispositif souterrain selon la revendication 9, **caractérisé en ce que** ladite deuxième paroi (5) a une surface interne (13) et une surface externe (6), ledit système de tuyaux (7) étant disposé dans ladite deuxième paroi (5) dans une position plus proche de ladite surface externe (6) que de ladite surface interne (13).

11. Dispositif souterrain selon la revendication 9 ou 10, ledit système de tuyaux (7) étant disposé contre ladite première paroi (4).

12. Dispositif souterrain selon l'une quelconque des revendications 9 à 11, selon lequel ledit système de tuyaux est sensiblement formé de tuyaux s'étendant dans la direction dans laquelle s'étend l'égout.

13. Dispositif souterrain selon l'une quelconque des revendications 9 à 12, selon lequel ledit système de tuyaux fait partie d'un circuit fermé pour un fluide.

14. Dispositif de chauffage (1) destiné à chauffer un bâtiment, ledit dispositif de chauffage comprenant un dispositif souterrain selon l'une quelconque des revendications 9 à 13, ledit dispositif de chauffage comprenant une pompe à chaleur (2), ledit dispositif souterrain et ladite pompe à chaleur (2) étant couplés de sorte que ladite pompe à chaleur peut transférer de la chaleur dudit dispositif souterrain audit bâtiment.

15. Procédé pour l'extraction de la chaleur depuis la couche terrestre et chauffer un bâtiment avec celle-ci, dans lequel un fluide est chauffé dans un dispositif souterrain selon l'une quelconque des revendications 9 à 13 et dans lequel ledit fluide, après chauffage, est conduit vers le côté froid d'une pompe à chaleur (2), dans lequel de la chaleur provenant du côté chaud de ladite pompe à chaleur (2) est fournie audit bâtiment.
